# FASCICULE DE BREVET EUROPEEN

(11) **EP 0 756 969 B1**
(45) Date de publication et mention de la délivrance du brevet: **21.04.1999**
(21) Numéro de dépôt: 96401493.0
(22) Date de dépôt: 05.07.1996
(51) Int. Cl.: B60R 16/02

(54) **Système de direction notamment pour véhicule automobile**
Kraftfahrzeug-Lenksystem
Steering system for vehicle

(30) Priorité: 31.07.1995 FR 9509318
(43) Date de publication de la demande: 05.02.1997
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Salez, Jean-Philippe, 25700 Valentigney (FR)
(74) Mandataire: Habasque, Etienne Joel Jean-François

(56) Documents cités:
- WO-A-91/17592
- WO-A-95/09744
- DE-A- 4 235 054
- DE-C- 4 322 879

## Description

La présente invention concerne un système de direction notamment pour véhicule automobile.

Plus particulièrement, la présente invention concerne un système de direction comportant un ensemble de colonne de direction adapté pour recevoir un volant de direction et des moyens à verrouillage de raccordement électrique de composants implantés sur le volant au reste des circuits du véhicule, comprenant au moins un premier connecteur raccordé aux composants implantés sur le volant et un second connecteur complémentaire raccordé au reste des circuits du véhicule.

On a assisté depuis quelques années à une intégration de plus en plus importante de composants électriques sur le volant de direction et en particulier dans le coussin central de celui-ci.

Ces composants électriques sont par exemple des organes de commande du fonctionnement d'organes fonctionnels du véhicule ou encore des organes de sécurité, tels que par exemple des modules à sac gonflable.

Ces différents composants doivent alors être raccordés au reste des circuits du véhicule par l'intermédiaire de connecteurs.

A cet effet, ces différents composants sont reliés par l'intermédiaire de différents conducteurs électriques se présentant par exemple sous la forme d'un câble, à un connecteur, ce connecteur étant adapté pour être enclenché dans un connecteur complémentaire également relié par l'intermédiaire par exemple d'un câble au reste des circuits du véhicule.

Pour permettre la rotation du volant par rapport à l'ensemble de colonne de direction, une bobine de conducteurs enroulés est implantée entre l'un des câbles et le connecteur correspondant.

On conçoit alors que le montage d'un tel système de direction consiste d'abord pour l'opérateur, à enclencher les connecteurs l'un dans l'autre, puis à monter le volant sur l'ensemble de colonne.

A cet effet, l'opérateur doit saisir les deux connecteurs, les enclencher l'un dans l'autre, puis ranger du mieux qu'il peut les câbles correspondants dans l'ensemble de colonne et/ou le volant afin que ceux-ci d'une part, ne soient pas visibles et d'autre part, ne gênent pas la rotation du volant par rapport à l'ensemble de colonne.

Une fois cette opération de raccordement électrique terminée, l'opérateur monte alors le volant sur l'ensemble de colonne, en emmanchant par exemple ce volant sur l'arbre de direction de celui-ci et en le fixant sur celui-ci à l'aide de moyens de serrage par exemple.

Une telle structure est connue de WO-A-9117592 par exemple.

On conçoit cependant qu'une telle structure se traduit par un montage relativement difficile du volant sur l'ensemble de colonne.

En effet, les opérations de raccordement électrique et de fixation du volant sur l'ensemble de colonne sont distinctes et doivent être réalisées de manière successive par l'opérateur.

Ceci se traduit par des risques de mauvais enclenchement des connecteurs et une perte de temps relativement importante.

Par ailleurs, les câbles peuvent également être mal rangés, ce qui se traduit alors par une dégradation de l'esthétique de la planche de bord et des risques de voir ces câbles géner la rotation du volant.

Le but de l'invention est donc de résoudre ces problèmes.

A cet effet, l'invention a pour objet un système de direction notamment pour véhicule automobile, du type comportant un ensemble de colonne de direction adapté pour recevoir un volant de direction et des moyens à verrouillage de raccordement électrique de composants implantés sur le volant au reste des circuits du véhicule, comprenant au moins un premier connecteur raccordé aux composants implantés sur le volant et un second connecteur complémentaire raccordé au reste des circuits du véhicule, la fixation de l'un des connecteurs sur l'organe correspondant, ensemble de colonne ou volant, étant assurée par des moyens de fixation débrayables pour permettre la rotation du volant par rapport à l'ensemble de colonne, après enclenchement des connecteurs caractérisé en ce que les connecteurs sont fixés l'un sur le volant et l'autre sur l'ensemble de colonne, en regard l'un de l'autre en position de montage du volant sur l'ensemble de colonne, pour permettre leur enclenchement l'un dans l'autre lors de l'emmanchement du volant sur l'ensemble de colonne.

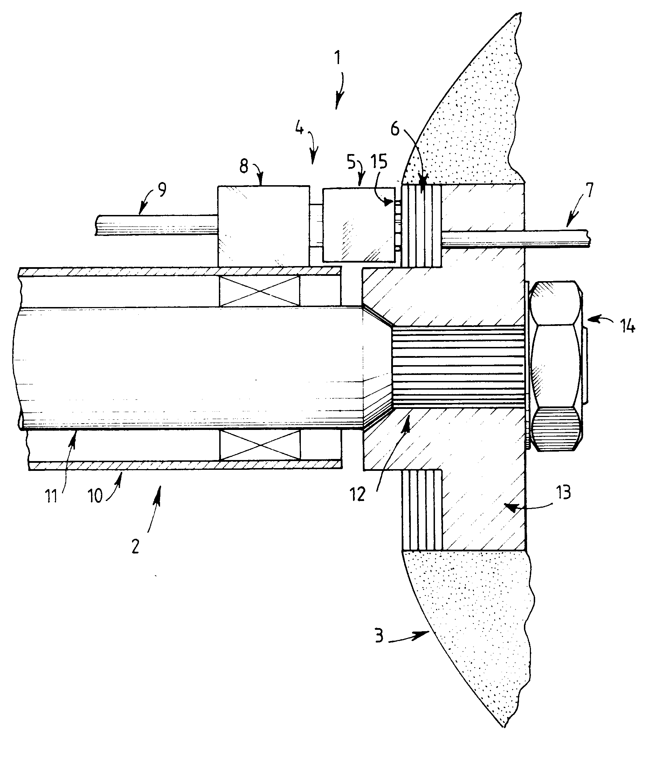

L'invention sera mieux comprise à la lecture de la description qui va suivre, donnée uniquement à titre d'exemple et faite en se référant au dessin annexé qui représente une vue en coupe schématique illustrant la structure d'un système de direction selon l'invention.

On reconnait en effet sur cette figure, un système de direction notamment pour véhicule automobile, qui est désigné par la référence générale 1.

Ce système de direction comporte un ensemble de colonne de direction désigné par la référence générale 2, adapté pour recevoir un volant de direction désigné par la référence générale 3 et des moyens à verrouillage de raccordement électrique de composants implantés sur le volant au reste des circuits du véhicule, ces moyens à verrouillage de raccordement électrique étant désignés par la référence générale 4 sur cette figure.

En fait, ces moyens à verrouillage de raccordement électrique comprennent par exemple, au moins un premier connecteur désigné par la référence générale 5 raccordé aux composants implantés sur le volant, par exemple par l'intermédiaire d'une bobine de conducteurs enroulés désignée par la référence générale 6 et d'un câble désigné par la référence générale 7 et un second connecteur complémentaire désigné par la référence générale 8, raccordé au reste des circuits du véhicule par l'intermédiaire par exemple d'un câble de conducteurs désigné par la référence générale 9.

La bobine de conducteurs enroulés est déjà bien connue dans l'état de la technique (voir par exemple le document WO-A-91 17 592) et permet un déplacement relatif du volant par rapport à l'ensemble, par déroulement et enroulement successifs de cette bobine de conducteurs dans un boîtier contenant cette bobine, en fonction de la rotation du volant par rapport au reste de l'ensemble de colonne.

Bien entendu, d'autres moyens de ce type peuvent être utilisés à la place de cette bobine.

On notera également que de façon classique cet ensemble de colonne comporte par exemple un corps de colonne de direction désigné par la référence générale 10, dans lequel et monté rotatif un arbre de direction 11, dont une extrémité 12 est adaptée pour recevoir un moyeu de volant de direction désigné par la référence générale 13, et des moyens de serrage 14 du volant et plus particulièrement de son moyeu sur cette extrémité d'arbre.

Selon l'invention, les connecteurs sont fixés l'un sur le volant et l'autre sur l'ensemble de colonne, en regard l'un de l'autre en position de montage du volant sur l'ensemble de colonne, pour permettre leur enclenchement l'un dans l'autre, lors de l'emmanchement du volant sur l'ensemble de colonne.

C'est ainsi par exemple que le connecteur 8 est fixé sur le corps de colonne de direction, tandis que le connecteur 5 est fixé sur le volant, c'est à dire par exemple sur le boîtier de la bobine de conducteurs 6 ou sur le moyeu de volant.

Cependant, la fixation de ce connecteur 5 sur l'organe correspondant, c'est à dire dans ce cas sur le volant, est assurée par des moyens de fixation débrayables pour permettre la rotation du volant par rapport à l'ensemble de colonne, après enclenchement des connecteurs.

Dans l'exemple de réalisation représenté sur cette figure, ces moyens de fixation débrayables sont constitués par des pions frangibles désignés de façon générale par la référence 15, interposés entre ce connecteur 5 et le boîtier contenant la bobine de conducteurs enroulés 6.

Il va de soi bien entendu que différents modes de réalisation de ces moyens de fixation débrayables peuvent être envisagés et que ceux-ci peuvent par exemple être prévus entre ce connecteur 5 et le moyeu de volant.

On conçoit alors que lors du montage du volant sur l'ensemble de colonne, l'ensemble de colonne étant en position dans le véhicule, le volant est livré complet chez le constructeur, avec la bobine de conducteurs enroulés 6 et le connecteur 5 dans une position déterminée par rapport à ce volant.

Le connecteur complémentaire 8 est quant à lui fixé sur l'ensemble de colonne dans une position alignée avec le connecteur 5 lorsque le volant est en position de montage, de sorte que lorsque l'opérateur emmanche le volant sur l'ensemble de colonne et par exemple sur l'arbre de direction, il enclenche en même temps les connecteurs l'un dans l'autre pour assurer le raccordement électrique des composants implantés sur le volant au reste des circuits du véhicule.

On conçoit alors que les opérations d'emmanchement du volant sur l'ensemble de colonne et d'enclenchement des connecteurs électriques l'un dans l'autre, sont réalisées simultanément lors du montage du volant sur l'ensemble de colonne contrairement à ce qui se passait dans l'état de la technique.

Ceci permet de faciliter le montage du volant sur l'ensemble de colonne, d'améliorer la fiabilité du raccordement électrique et l'esthétique de la planche de bord dans la mesure où il n'y a plus de câbles à ranger dans un endroit quelconque du volant et/ou de l'ensemble de colonne.

On notera également que les connecteurs peuvent être constitués par n'importe quels connecteurs de raccordement à verrouillage de position bien connus dans l'état de la technique.

Ces moyens à verrouillage ne seront pas décrits dans le détail dans la mesure où ils peuvent présenter différentes formes connues.

On notera cependant que ces moyens à verrouillage permettent, une fois que les connecteurs sont enclenchés l'un dans l'autre, d'éviter toute séparation accidentelle de ceux-ci.

On notera également que bien que dans l'exemple de réalisation décrit, ce soit le connecteur 5 qui est relié à l'organe correspondant c'est à dire au volant, par l'intermédiaire de moyens de fixation débrayables, l'inverse peut également être envisagé dans le cas où la bobine de conducteurs enroulés est prévue sur l'ensemble de colonne.

Dans ce cas, c'est le connecteur 8 qui est fixé sur cet ensemble de colonne ou sur cette bobine par l'intermédiaire des moyens de fixation débrayables.

De plus, et bien que dans l'exemple de réalisation décrit, on ait illustré des moyens de fixation débrayables formés par des pions frangibles, d'autres moyens débrayables peuvent être envisagés, tels que par exemple des crochets escamotables ou autres.

La fonction de ces moyens est de maintenir le connecteur correspondant en position alignée avec l'autre connecteur lors du montage du volant sur l'ensemble de colonne, pour permettre un enclenchement de ces connecteurs et de libérer ce connecteur lorsque l'on fait tourner le volant par rapport à l'ensemble de colonne.

Il va de soi bien entendu que différents modes de réalisation de ce système de direction peuvent être envisagés.

## Revendications

1. Système de direction notamment pour véhicule automobile, du type comportant un ensemble de colonne de direction (2) adapté pour recevoir un volant de direction (3) et des moyens à verrouillage (4) de raccordement électrique de composants implantés sur le volant au reste des circuits du véhicule, comprenant au moins un premier connecteur (5) raccordé aux composants implantés sur le volant (3) et un second connecteur complémentaire (8) raccordé au reste des circuits du véhicule, la fixation de l'un des connecteurs sur l'organe correspondant, ensemble de colonne ou volant, étant assurée par des moyens de fixation débrayables (15) pour permettre la rotation du volant par rapport à l'ensemble de colonne, après enclenchement des connecteurs, caractérisé en ce que les connecteurs (5,8) sont fixés l'un (5) sur le volant (3) et l'autre (8) sur l'ensemble de colonne (2), en regard l'un de l'autre en position de montage du volant sur l'ensemble de colonne, pour permettre leur enclenchement l'un dans l'autre lors de l'emmanchement du volant sur l'ensemble de colonne.

2. Système selon la revendication 1, caractérisé en ce que les moyens de fixation débrayables comprennent des pions frangibles (15).

3. Système selon la revendication 1 ou 2, caractérisé en ce que le connecteur fixé sur l'organe correspondant par l'intermédiaire des moyens de fixation débrayables (15) est associé à une bobine de conducteurs enroulés (6), permettant la rotation du volant par rapport à l'ensemble de colonne.

4. Système selon l'une quelconque des revendications précédentes, caractérisé en ce que les moyens de fixation débrayables (15) sont interposés entre le volant de direction (3) et le connecteur correspondant (5).

5. Système selon l'une quelconque des revendications 1 à 3, caractérisé en ce que les moyens de fixation débrayables sont interposés entre l'ensemble de colonne (2) et le connecteur correspondant (8).

## Claims

1. Steering system, particularly for a motor vehicle, of the type comprising a steering-column assembly (2) designed to take a steering wheel (3) and means with locking (4) for the electrical connection of components fitted on the steering wheel to the rest of the vehicle circuits, comprising at least one first connector (5) connected to the components fitted on the steering wheel (3) and a complementary second connector (8) connected to the rest of the vehicle circuits, the attachment of one of the connectors to the corresponding member, column assembly or steering wheel, being provided by disengageable attachment means (15) so as to allow the steering wheel to turn with respect to the column assembly after the connectors have been engaged, characterized in that the connectors (5, 8) are attached, in the case of one of them (5), to the steering wheel (3) and, in the case of the other (8), to the column assembly (2), facing each other when the steering wheel is in the position for being mounted on the column assembly, so as to allow them to engage one in the other when the steering wheel is pushed onto the column assembly.

2. System according to Claim 1, characterized in that the disengageable attachment means comprise frangible pins (15).

3. System according to Claim 1 or 2, characterized in that the connector attached to the corresponding member via the disengageable attachment means (15) is associated with a coil of wound conductors (6) allowing the steering wheel to be turned relative to the column assembly.

4. System according to any one of the preceding claims, characterized in that the disengageable attachment means (15) are inserted between the steering wheel (3) and the corresponding connector (5).

5. System according to any one of Claims 1 to 3, characterized in that the disengageable attachment means are inserted between the column assembly (2) and the corresponding connector (8).

## Patentansprüche

1. Lenksystem, insbesondere für ein Kraftfahrzeug, vom Typ, welcher eine Lenksäuleneinheit (2) zur Aufnahme eines Lenkrads (3) sowie Einrastmittel (4) zur elektrischen Verbindung der am Lenkrad (3) angebrachten Bauteile mit dem Rest der Fahrzeugschaltungen aufweist, mit mindestens einem mit den am Lenkrad (3) angebrachten Bauteilen verbundenen ersten Verbinder (5) und einem zweiten, mit dem Rest der Fahrzeugschaltungen verbundenen, komplementären Verbinder (8), wobei die Befestigung des einen der Verbinder am entsprechenden Teil, d.h. der Lenksäuleneinheit oder dem Lenkrad, durch entkoppelbare Befestigungsmittel (15) sichergestellt ist, um die Drehung des Lenkrads gegenüber der Lenksäuleneinheit nach Einrasten der Verbinder zu ermöglichen,
dadurch gekennzeichnet, daß von den Verbindern (5,8) einer (5) am Lenkrad (3) und der andere (8) an der Lenksäuleneinheit (2) in der Einbauposition des Lenkrads an der Lenksäule einander gegenüberstehend angeordnet sind, um beim Aufsetzen des Lenkrads auf die Lenksäule das Einrasten des einen in den anderen zu ermöglichen.

2. System nach Anspruch 1, dadurch gekennzeichnet, daß die entkoppelbaren Befestigungsmittel zerbrechliche Metallstücke (15) umfassen.

3. System nach Anspruch 1 oder 2, dadurch gekennzeichnet, daß der am entsprechenden Teil mittels der entkoppelbaren Befestigungsmittel (15) befestigte Verbinder einer gewickelten Verbinderspule (6) zugeordnet ist, welche die Drehung des Lenkrads gegenüber der Lenksäuleneinheit ermöglicht.

4. System nach einem der vorangehenden Ansprüche, dadurch gekennzeichnet, daß die entkoppelbaren Befestigungsmittel (15) zwischen das Lenkrad (3) und den entsprechenden Verbinder (5) eingefügt sind.

5. System nach einem der Ansprüche 1 bis 3, dadurch gekennzeichnet, daß die entkoppelbaren Befestigungsmittel zwischen die Lenksäuleneinheit (2) und den entsprechenden Verbinder (8) eingefügt sind.
